**Europäisches Patentamt**

**European Patent Office**

**Office européen des brevets**

(19)

(11) Veröffentlichungsnummer: **0 236 816**
**B1**

(12) # EUROPÄISCHE PATENTSCHRIFT

(45) Veröffentlichungstag der Patentschrift:
24.10.90

(21) Anmeldenummer: 87102372.7

(22) Anmeldetag: **19.02.87**

(51) Int. Cl.⁵: **G21C 19/18, G21C 19/20**

(54) **Verfahren und Einrichtung zur Unterstützung des Beladevorganges eines Reaktorkernes mit längserstreckten Brennelementen.**

(30) Priorität: 04.03.86 DE 3606997

(43) Veröffentlichungstag der Anmeldung:
16.09.87 Patentblatt 87/38

(45) Bekanntmachung des Hinweises auf die Patenterteilung:
24.10.90 Patentblatt 90/43

(84) Benannte Vertragsstaaten:
BE CH DE FR LI NL SE

(56) Entgegenhaltungen:
BE-A- 674 268
DE-A- 2 513 655
GB-A- 1 074 282

(73) Patentinhaber: ABB Reaktor GmbH, Dudenstrasse 44,
D-6800 Mannheim 1(DE)

(72) Erfinder: Day, Bobby, Am Eschbach 9c,
D-5401 Waldesch(DE)

(74) Vertreter: Rupprecht, Klaus, Dipl.-Ing. et al, c/o BBC
Brown Boveri Aktiengesellschaft ZPT
Postfach 100351 Kallstadter Strasse 1,
D-6800 Mannheim 1(DE)

ACTORUM AG

## Beschreibung

Die Erfindung betrifft ein Verfahren zur Unterstützung des Beladevorganges eines Reaktorkernes mit neuen und/oder bestrahlten längserstreckten Brennelementen, wobei ein Brennelement mit einer Brennelementwechselmaschine von einem Lagerbecken, vorzugsweise unter einer neutronenabschirmenden Flüssigkeitsabdeckung, in eine Gitterposition eines Reaktorkernes eingesetzt wird.

Ein derartiges Verfahren ist aus der DE-B 2 246 637 bekannt. Dort soll zur Beschleunigung des Beladevorganges beim Brennelementwechsel ein Behälter mit mehreren Brennelementen gleichzeitig in den Reaktorbehälter eingesetzt werden.

Weiterhin ist es aus der DE-A 1 564 301 bekannt, daß durch Beobachtung mit einem Fernglas über die mehrere Meter dicke Wasserabdeckung die schwankenden Brennelemente nur unter großem Zeitaufwand in die Gitterpositionen des Kerns eingesetzt werden können. Das Schwanken der Brennelemente wird mittlerweile durch andere Maßnahmen verhindert. Ein Problem ist jedoch darin zu sehen, daß die Achse des Brennelementfußes nicht mit seiner Sollachse übereinstimmt. Derartige, aufgrund von Verbiegungen entstehende Abweichungen, treten zwar nur in der Größenordnung von einigen Millimetern auf, sie erschweren jedoch das Einführen des Brennelementfußes in die jeweilige Gitterposition des Reaktorkerns erheblich. Die in der DE-A 1 564 301 vorgeschlagene mechanische Einführhilfe ist jedoch nur dann einsetzbar, wenn zwischen den verschiedenen Gitterpositionen ein ausreichender Platz vorhanden ist, wie er z. B. für das Einführen von kreuzförmigen Steuerelementen erforderlich ist.

Es ist die Aufgabe der Erfindung ein Verfahren der eingangs genannten Art anzugeben, das ohne mechanische Einführhilfen das Einbringen von Brennelementen, deren Fuß von seiner Sollachse abweicht, ermöglicht.

Gelöst wird diese Aufgabe erfindungsgemäß dadurch, daß auf dem Weg der Brennelementwechselmaschine zwischen Lagerbecken und Reaktorbehälter die Istposition des Brennelementfußes dem Fahrgerät der Brennelementwechselmaschine zugeleitet wird und daß die Istposition mit der Sollposition des Brennelementfußes verglichen wird und eine Abweichung korrigierend in die Fahrbewegung der Brennelementwechselmaschine eingreift.

Verbiegungen des Brennelements, wie sie aufgrund deren Gesamtlänge von mehr als vier Metern durchaus an der Tagesordnung sind, können dadurch das Einführen der Brennelemente in die Gitter der im Reaktorbehälter angeordneten Kerntragestruktur nicht mehr behindern. Weicht die ermittelte Istposition des Fußstückes von seiner Sollposition ab, so wird die Fahrbewegung der Brennelementwechselmaschine um diese Abweichung korrigiert.

Gemäß einer bevorzugten Ausgestaltung des Verfahrens wird zur Ermittlung der Istposition des Brennelementfußes eine stationär angeordnete Fernsehkamera verwendet, deren Bild zu einem Monitor übertragen wird, der die Abweichung zur Sollposition erkennen läßt.

Vorzugsweise ist die Meßstelle zur Positionserkennung des Brennelementfußes im Bereich der Durchführung zwischen einem Lagerbecken und einem Flutbecken angeordnet.

Die Brennelementwechselmaschine fährt dabei eine vorbestimmte Position relativ zum Standort der Fernsehkamera an, sodaß die Istposition des Brennelementfußes exakt ermittelt werden kann.

Die Halterung für die Meßstellen ist dabei vorzugsweise in den Führungen für den Schütz gelagert. Dadurch gelingt auf einfache Weise eine Fixierung der Kamera.

Anhand eines Ausführungsbeispieles und der schematischen Figuren 1 bis 5 wird das erfindungsgemäße Verfahren und eine Einrichtung zur Durchführung des Verfahrens beschrieben.

Dabei zeigt die

Figur 1 einen Querschnitt durch ein Lager- und ein Flutbecken mit einem Reaktorbehälter und einer Brennelementwechselmaschine,

Figur 2 eine Ansicht entlang der Linie II-II der Figur 1 in einem größeren Maßstab,

Figur 3 einen Monitorausschnitt mit dem Zentralbereich der Unterseite eines Brennelementfußstückes und der Sollachse des Fußstückes,

Figur 4, Figur 4a die Abweichung des Brennelementfußes von der Gitterposition

Figur 5 ein Brennelement in Längserstreckung in einem größeren Maßstab dargestellt.

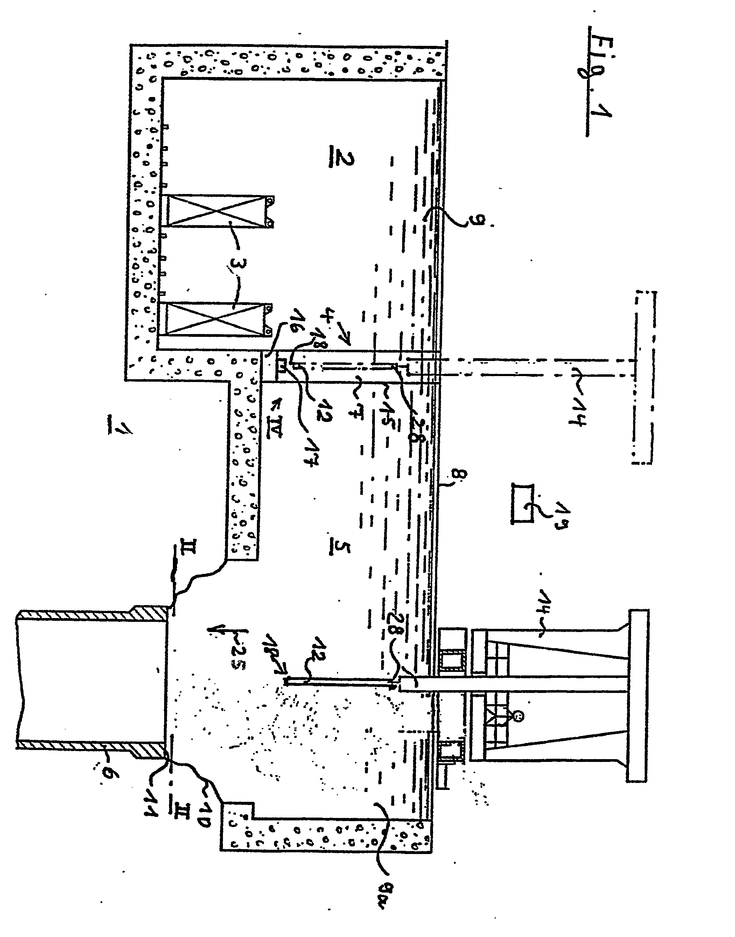

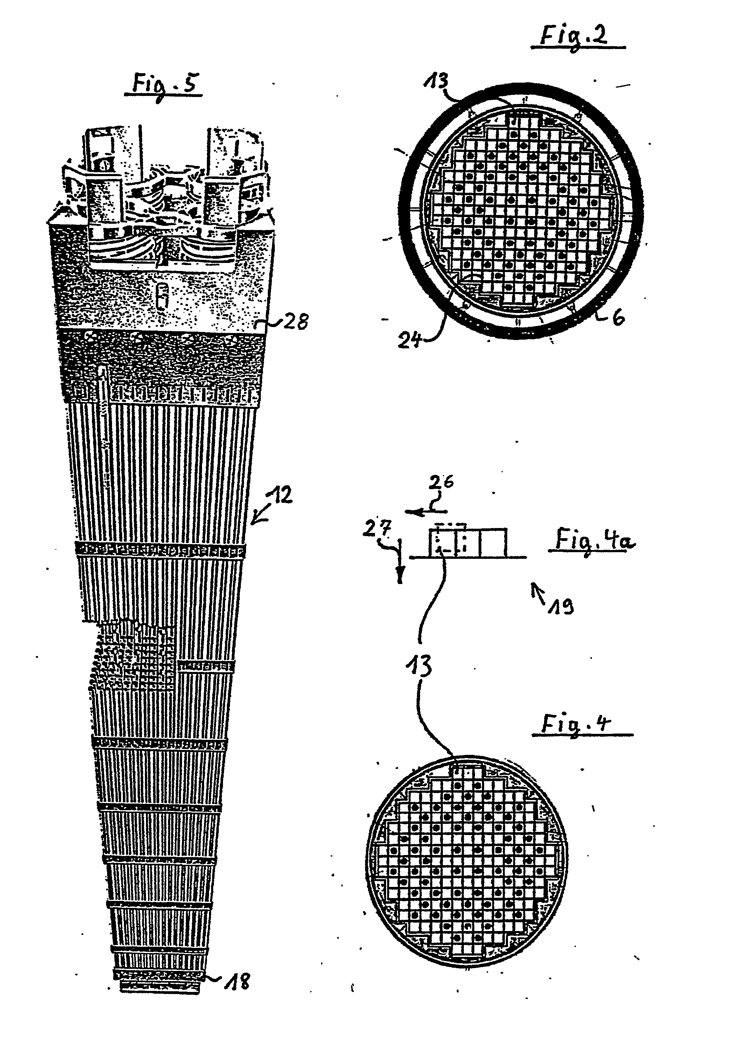

Die Fig. 1 zeigt den Querschnitt durch den Teilbereich 1 eines nicht weiter dargestellten Reaktorgebäudes. Mit 2 wird das Lagerbecken bezeichnet, in dem zwei Lagergestelle 3 angedeutet sind. Die Zwischenwand 4 mit einem nicht dargestellten Schütz, der beim Betrieb der Reaktoranlage eine Durchführung 7 verschließt und das Lagerbecken 2 von dem oberhalb des Reaktorbehälters 6 angeordneten Flutbecken 5 trennt. In der Figur 1 ist eine abgeschaltete Reaktoranlage dargestellt, so daß der Reaktorbehälter 6 geöffnet ist. Sowohl das Lagerbecken 2 als auch das Flutbecken 5 sind über die Durchführung 7 bis zum Niveau 8 mit einer mehrere Meter dicken Wasserfüllung 9, 9a versehen. Ein Kompensator 10, der sich zwischen dem Flutbecken 5 und dem Flansch 11 des geöffneten Reaktorbehälters 6 erstreckt verhindert ein Austreten des Wassers nach unten.

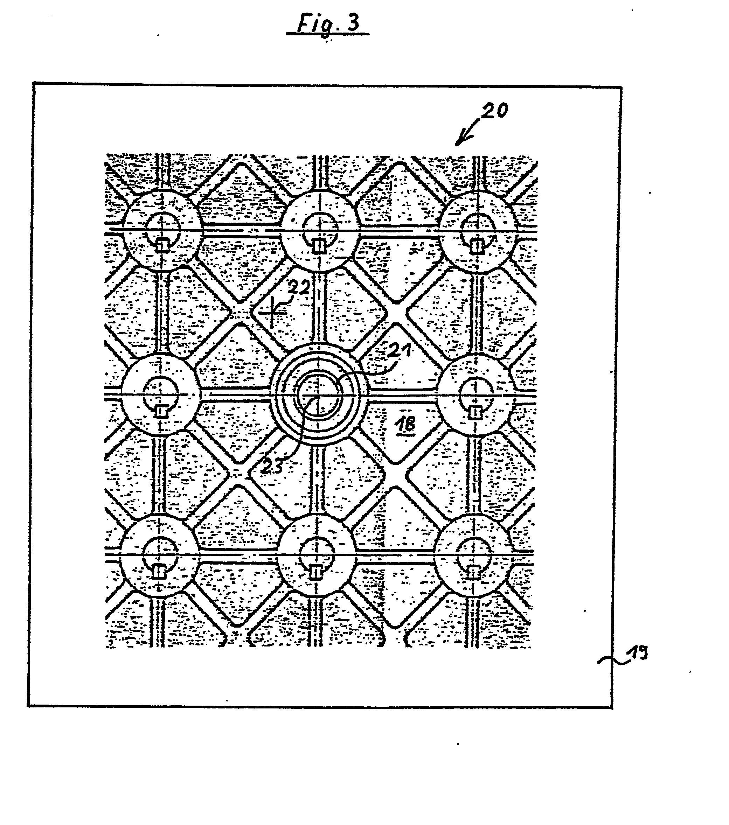

Soll aus dem Lagergestell 3 des Lagerbeckens 2 ein Brennelement 12 in eine Gitterposition 13 der Kerntragestruktur 24 des Reaktorbehälters 6 (Figur 2 und 4) eingesetzt werden, so nimmt eine Brennelemetwechselmaschine 14 ein solches Brennelement 12 aus dem Gestell 3 auf und fährt mit dem Brennelement durch die Durchführung 7 zwischen dem Lagerbecken 2 und dem Flutbecken 5. In den Führungsschienen 15 für den entfernten Schütz ist über einen Halter 16 eine Fernsehkamera 17 stationär angeordnet. Sobald die Brennelementwechselmaschine 14 in die strichpunktiert angegebene Position gelangt ist, erscheint die Position des Fußstückes 18 des Brennelementes 12 im Monitor 19 (Fig. 3). Zwar ist auf dem Monitor der von der Kamera aufgenommene Zentralbereich 20 der Unterseite des Brennelementfußes 18 zu sehen. Das Zentralrohr 21 des Brennelementfußes dient dabei als Bezugspunkt. Die Sollposition des Zentralrohres und damit des Brennelementfußes ist mit der Sollachse 22 in dem Fahrgerät gespeichert und erscheint ebenfalls auf dem Monitor. Der Fahrer der Brennelementwechselmaschine bringt jetzt die Sollachse 22 mit der Achse 23 des Zentralrohres 21 zur Deckung und gleicht somit die Abweichung zwischen Soll- und Istposition des Brennelementfußes aus. Die in der Fig. 4a in einem größeren Maßstab dargestellte Gitterposition 13 der Kerntragestruktur 24 nach Figur 4 zeigt in unterbrochenen Linien die Istposition des Brennelmentfußstückes. Ein Herabfahren des Brennelementes in Pfeilrichtung 25 vor der Korrektur der Abweichung würde zum Aufsetzen des Brennelementes 12 führen und somit das Einführen in die Gitterpositionen erschweren. Geht jedoch einer Korrekturbewegung der Brennelementwechselmaschine in Pfeilrichtung 26, 27 vorweg, bis die Sollachse 22 mit der Achse 23 des Zentralrohres 21 gemäß Figur 3 zur Deckung gebracht ist, kann die Brennelementwechselmaschine 14 das Brennelement 12 gefahrlos in die Gitterposition 13 einfahren (in Fig. 4 mit ausgezogenen Linien dargestellt).

Eine Verbiegung drückt sich in einer Fluchtabweichung zwischen dem Kopfstück 28 und dem Fußstück 18 des Brennelementes 12 aus, wobei das Sollmaß der Fahrbewegung der Brennelementwechselmaschine mit der Position des Kopfstückes 28 geeicht ist und gegenüber der Position des Fußstückes 18 korrigiert werden muß. Dabei muß ein in der Fig. 5 in größerem Maßstab dargestelltes Brennelement, mit einer Gesamtlänge von ca. 4207 mm, einer Kantenlänge von 217 mm und einem Gesamtgewicht von ca. 683 kg gefahrlos in das Gitter des Reaktorbehälters (Fig. 2) eingebracht werden.

Eine Zeitersparnis bei einer Neubeladung des gesamten Kernes von mehreren Tagen mit einer daraus resultierenden größeren Verfügbarkeit der Kernreaktoranlage ist ein wesentlicher Vorteil des neuen Beladeverfahrens.

Eine verwindungssteife Prüflehre, die in ihren Konturen einem Brennelement ähnelt, dient zum Einjustieren von Kamerastellung und Sollachse des Brennelementes. Sie kann sowohl in der Durchfahrt 7 als auch an einer anderern Stelle des Lagerbeckens positioniert werden.

## Patentansprüche

1. Verfahren zur Unterstützung des Beladevorganges eines Reatorkerns mit neuen und/oder bestrahlten längserstreckten Brennelementen, wobei ein Brennelement mit einer Brennelementwechselmaschine von einem Lagerbecken vorzugsweise unter einer neutronenabschirmenden Flüssigkeitsabdeckung, in eine Gitterposition eines Reaktorkernes eingesetzt wird, dadurch gekennzeichnet, daß auf dem Weg der Brennelementwechselmaschine (14) zwischen Lagerbecken (2) und Reaktorbehälter (6) die Istposition des Brennelementfußes (18) dem Fahrgerät der Brennelementwechselmaschine (14) zugeleitet wird, und daß die Istposition mit der Sollposition (13) des Brennelementfußes verglichen wird und eine Abweichung korrigierend in die Fahrbewegung der Brennelmentwechselmaschine (14) eingreift.

2. Verfahren nach Anspruch 1, dadurch gekennzeichnet, daß zur Ermittlung der Istposition (13) des Brennelementfußes eine stationär angeordnete Fernsehkamera (17) verwendet wird, deren Bild zu einem Monitor (19) übertragen wird, der die Abweichung zur Sollposition erkennen läßt.

3. Einrichtung zur Durchführung des Verfahrens nach Anspruch 1 oder 2, mit einer Brennelementwechselmaschine (14) zum Einsetzen eines in einem Lagerbecken (2) befindlichen Brennelements in eine Gitterposition eines Reaktor-Kernes, dadurch gekennzeichnet, daß eine Fernsehkamera (17) zur Ermittlung der Istposition des Brennelementfußes in bezug auf seine Sollposition (18) im Bereich der Durchführung (7) zwischen dem Lagerbecken (2) und einem Flutbecken (5) angeordnet ist.

4. Einrichtung nach Anspruch 3, dadurch gekennzeichnet, daß eine Halterung für die Fernsehkamera (17) in den Führungsschienen (15) eines entnommenen Schützes gelagert ist.

## Claims

1. Method of assisting the charging operation of a nuclear reactor with fresh and/or irradiated elongated fuel assemblies, a fuel assembly being inserted by a fuel handling machine from a storage pool, preferably underneath a neutron-shielding cover of liquid, into a lattice position of a reactor core, characterized in that, while the fuel handling machine (14) is on the way between storage pool (2) and reactor vessel (6), the actual position of the fuel assembly bottom end piece (18) is fed to the transporter of the fuel handling machine (14), and in that the actual position is compared with the set position (13) of the fuel assembly bottom end piece and a deviation intevenes correctively into the travelling movement of the fuel handling machine (14).

2. Method according to Claim 1, characterized in that, to detemine the actual position (13) of the fuel assembly bottom end piece, a fixed television camera (17) is used, the image of which is transmitted to a monitor (19), which detects the deviation from the set position.

3. Apparatus for carrying out the method according to Claim 1 or 2, having a fuel handling machine (14) for inserting a fuel assembly located in a storage pool (2) into a lattice position of a reactor core, characterized in that a television camera (17) for determining the actual position of the fuel assembly bottom end piece (18) in relation to its set position is arranged in the region of the passage (7) between the storage pool (2) and a flooding pool (5).

4. Apparatus according to Claim 3, characterized in that a holder for the television camera (17) is mounted in the guide rails (15) of a removed sluice gate.

**Revendications**

1. Procédé destiné à assister l'opération de chargement d'un cœur de réacteur avec des éléments combustibles longitudinaux neufs et/ou irradiés, un élément combustible étant, par une machine de manutention d'éléments combustibles, prélevé dans une piscine de stockage de préférence remplie d'un liquide constituant un écran pour les neutrons et mis en place dans un emplacement de grille d'un cœur de réacteur, caractérisé en ce que la position réelle du pied d'élément combustible (18) est transmise au dispositif de translation de la machine de manutention d'éléments combustibles (14) sur le trajet de ladite machine entre la piscine de stockage (2) et la cuve de réacteur (6) et en ce que la position réelle est comparée à la position de consigne (13) du pied d'élément combustible et qu'un écart est introduit dans le sens d'une correction dans le mouvement de translation de la machine de manutention d'éléments combustibles (14).

2. Procédé selon la revendication 1, caractérisé en ce que la détermination de la position réelle (13) du pied d'élément combustible s'effectue à l'aide d'une caméra de télévision (17) stationnaire dont l'image est transmise à un moniteur (19) qui permet de détecter l'écart par rapport à la position de consigne.

3. Dispositif de réalisation du procédé selon la revendication 1 ou 2 comprenant une machine de manutention d'éléments combustibles (14) destinée à mettre en place, à un emplacement de grille d'un cœur de réacteur, un élément combustible se trouvant dans une piscine de stockage (2), caractérisé en ce qu'une caméra de télévision (17) destinée à déterminer la position réelle du pied d'élément combustible (18) par rapport à sa position de consigne est disposée dans la zone du passage (7) entre la piscine de stockage (2) et une piscine de réacteur (5).

4. Dispositif selon la revendication 3, caractérisé en ce qu'un support pour la caméra de télévision (17) est monté dans les rails de guidage (15) d'une vanne extraite.

Fig. 1

_Fig. 5_

_Fig. 2_

13

24

6

26

27

_Fig. 4a_

19

13

_Fig. 4_

28

12

18

Fig. 3